Europäisches Patentamt

(19) European Patent Office

Office européen des brevets

(11) Publication number: **0 082 785**

A2

(12) # EUROPEAN PATENT APPLICATION

(21) Application number: 82402336.0

(22) Date of filing: 20.12.82

(51) Int. Cl.³: **F 02 C 9/46**

(30) Priority: 21.12.81 US 332390

(43) Date of publication of application:
29.06.83 Bulletin 83/26

(84) Designated Contracting States:
DE FR GB IT SE

(71) Applicant: THE BENDIX CORPORATION
Executive Offices Bendix Center
Southfield Michigan 48037(US)

(72) Inventor: Voight, Robert Wayne
53269 Bajer Lane
South Bend Indiana 46635(US)

(74) Representative: Huchet, André et al,
Service Brevets Bendix 44, rue François 1er
F-75008 Paris(FR)

(54) Fuel control system for gas turbine engine.

(57) A fuel control system for a gas turbine engine of the kind having at least one compressor (12, 14) and turbine spool (20, 22) and a free turbine (24), comprising a pneumatic fuel metering device (34) whose metering valve is controlled by a pneumatic mechanism as a function of the difference between a reference pressure (Px) and a modulated control pressure (Py) which can be varied either by a first governor (50) responsive to turbine speed (Ng) or by a second governor (48) responsive to free turbine speed (Nf), said governors thus providing a parallel governing mode.

According to this invention, at least one of said governors (48, 50) is an electronic control unit generating an electrical signal indicative of a desired engine output power, and there is provided an interface means (44, 46) converting said signal into a corresponding variation of the control pressure (Py).

For use particularly in control systems for helicopters and the like.

FIG. 1

FUEL CONTROL SYSTEM FOR GAS TURBINE ENGINE

The present invention relates to a fuel control system for gas turbine engines, and more particularly, for gas turbine engines of the free turbine type such as those used in helicopters and the like.

Fuel controllers for gas turbine engines of the free turbine type are conventionally known in the art. In general, they comprise a fuel metering control for the gas generator portion of the engine which is regulated by a governor based on gas generator speed. Additionally, most systems comprise a free turbine speed governor which produces a reset signal based on the speed and load of the free turbine and hence output power. The reset signal from the free turbine governor usually regulates the power output from the gas generator by one of two techniques.

In the first method the reset signal changes or resets the scheduled speed of the gas generator governor. Since the scheduled speed is used as a reference for the gas generator governor, the fuel flow is regulated accordingly, and thus varies the speed and output power from the engine. The reset signal acts as a limiting range for the gas generator governor. The type of system will be termed hereinafter, a governor reset system.

In a second type of free turbine engine fuel control, the fuel valve position is reset directly by a control signal from the free turbine governor. In this method the gas generator governor and free turbine governor act in parallel to provide a fuel valve positioning scheme. The parallel control of the free turbine governor provides a limiting range for the gas generator governor as was the previous case. This type of system will be defined hereinafter as a fuel flow reset system.

U.S. Patent No. 3 587 229 illustrates both of these governing schemes. A parallel governing scheme or fuel flow reset system is shown in the reference and is used to position a fuel metering valve of a pneumatic fuel control. The positioning of the fuel valve is regulated by varying the pneumatic pressure of a control chamber of a bellows mechanism adapted to move the valve. Each of the dual governors regulates the open area of an orifice to independently control the pressure in the bellows chamber and thereby position the fuel valve. Although advantageous and proven reliable for many applications, the fuel control system in the above reference utilizes two mechanical governors in the illustrated system to provide the parallel governing.

More recently, electronic governors have been developed to control the fuel flow to a gas turbine engine. Electronic governors provide greater flexibility for engine control than mechanical governors. Additional features such as torque limiting and temperature limiting of the free turbine engine can be included at a reasonable cost in extra circuitry. For multi-engine applications load sharing can be accomplished in a more facile manner than with mechanical governors.

Heretofore, in free turbine type engines the preferred form of electronic governing has been the gas generator governor reset mode which allows the serial combination of electronic signals in a normal fashion. The fuel flow is thus finally regulated by an electrical signal from the gas generator governor.

The controlling electrical signal from the gas generator governor is then applied to a hydraulic servomechanism that controls the position of the fuel valve. In concert with the electronic governors there is usually included a backup mechanism in the hydraulic servo portion to allow the engine to continue operation in the event of a failure in the electronic portion of the control. The mechanical backup devices in these controls many times are of undue complexity and add expense to the control.

Moreover, the new electronic governors have not been used with a pneumatic fuel control which is less expensive than its hydraulic servo counterpart.

Therefore, it would be highly desirable to attain in one free turbine engine fuel control system the advantages of electronic governing for system control flexibility, pneumatic fuel metering control for cost effectiveness, and a mechanical governor as a backup for the electronic governor for reliability. However, the previous fuel control systems have not illustrated the manner in which these components can be most optimally interfaced with each other and have not illustrated a parallel electronic governing mode for a pneumatic fuel metering control.

It is an object of the present invention to teach how such an optimal combination can be implemented, and this is achieved, in a first preferred embodiment of the invention where the fuel control system for a gas turbine engine of the kind having at least one compressor and turbine spool and a free turbine comprises a pneumatic fuel metering device inclu- ing a main fuel passage, a metering valve in said passage, a pneumatic control system for said valve including a chamber, a governor bellows in said chamber, a linkage connecting said bellows to said valve, a first passage for communicating modulated compressor discharge pressure to one side of said bellows, a second passage connecting said compressor discharge pressure with the other side of said governor bellows, and further having a first bleed and a second bleed in said second passage, said system further comprising a mechanical governor responsive to turbine speed for controlling said first bleed, thanks to the fact that the system further includes an electronic governor responsive to free turbine speed for generating an electrical signal indicative of a desired engine output power, and means for controlling said second bleed in accordance with said electrical signal.

In this first preferred embodiment, where the two governors provide a parallel governing mode, an electronic free turbine governor is thus interfaced with the pneumatic fuel control by means for varying the pressure in one of the pressure chambers in response to an electrical signal. In this implementation, the pneumatic fuel control is additionally interfaced with a mechanical gas generator governor by means for varying the pressure in the one pressure chamber in response to a mechanical signal. One advantage of such an arrangement is that the inexpensive pneumatic fuel metering control can be regulated by an electronic control which provides increased flexibility to match the system to various engine applications while, if the electronic free turbine governor fails, the mechanical gas generator governor can provide an immediate backup control.

A second preferred embodiment of the invention includes the pneumatic fuel control interfaced with a mechanical free turbine governor and an electronic gas generator governor.

A third preferred embodiment comprises an electronic gas generator governor and an electronic free turbine governor interfaced to the pneumatic fuel metering control to provide, here again, a parallel governing mode.

These and other advantageous features of the invention will become apparent from reading the following description of three preferred embodiments, given by way of examples only and with reference to the accompanying drawings, in which :

Figure 1 is a system block diagram view of a fuel control system for a gas turbine engine constructed in accordance with the invention ;

Figure 2 is a cross-sectional side view of the pneumatic fuel control free-turbine governor, and gas generator governor illustrated in Figure 1;

Figure 3 is a cross-sectional fragmented side view of a second embodiment of the invention describing the interface of an electronic gas generator governor and a mechanical free turbine governor to the pneumatic fuel control illustrated in Figure 2;

Figure 4 is a cross-sectional fragmented side view of a third embodiment of the invention describing the interface of an electronic gas generator governor and an electronic free turbine governor to the pneumatic fuel control illustrated in Figure 2;

Figure 5 is a detailed electrical schematic diagram of the electronic gas generator governor illustrated in Figure 3 and Figure 4; and

Figure 6 is a detailed electrical schematic diagram of the electronic free turbine governor illustrated in Figure 2 and Figure 4;

Figure 7 is a graphical representation of fuel air ratio Wf/Pc as a function of control current Ig, If for the electronic governor interfaces 44, 46 illustrated in Figures 2, 3, and 4;

Figure 8 is a schematic representation of a second implementation of the electronic governor interfaces 44, 46 illustrated in Figures 2, 3, and 4;

Figure 9 is a schematic representation of a third implementation of the electronic governor interfaces illustrated in Figures 2, 3, and 4;

Figure 10 is a graphical representation of fuel/air ratio (Wf/Pc) as a function of gas generator speed (Ng) illustrating the governing action of the system; and

Figure 11 is a graphical representation of power (P) output from the free turbine as a function of free turbine speed (Nf) illustrating the governing action of the system.

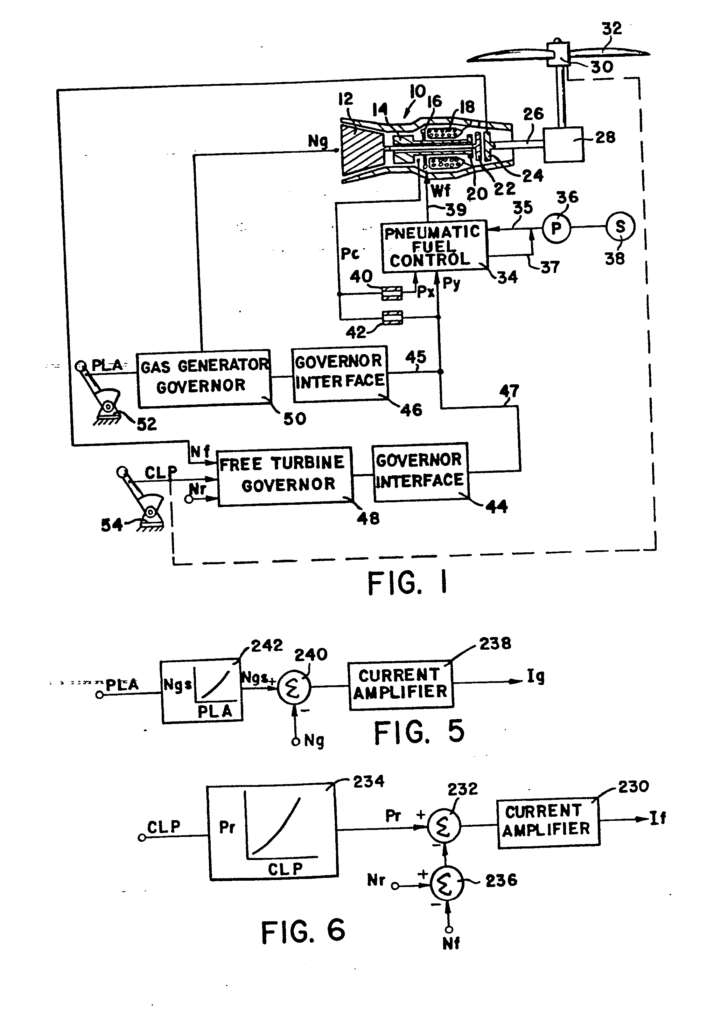

In Figure 1, a gas turbine engine 10 is shown receiving metered fuel flow (Wf) from a pneumatic fuel metering control device 34 under the control of a power lever throttle 52 and a collective pitch throttle 54. The power lever and collective pitch throttles 52, 54 are provided for control of the engine 10 by a pilot through the signals PLA, CLP, indicative of the power lever and collective pitch angles, respectively. The signals may be developed by electronic sensors on the throttles indicating the relative angle of displacement from a reference position, or alternatively be developed from mechanical linkages indicative of a position depending on the embodiment of the system.

The gas turbine engine 10 is of the conventional axial compressor type having a low pressure compressor 12 in series with a high pressure compressor 14. The dual configuration of compressors 12, 14 draws air from an inlet and compresses it into a denser more energetic form. The airflow is thereafter combusted in burner chambers 18 after being supplied with a metered fuel flow (Wf) from a fuel ring 16. The energetic gas developed by burning the fuel/air mixture expands to power a set of turbines 20 and 22. Turbine 20 is connected to and rotates the high pressure compressor 14 while turbine 22 is connected to and rotates the low pressure compressor 12. After expending energy to power the compressor section of the engine 10 the energetic gas is used to power a free turbine 24 and thereafter exhausted.

The free turbine 24, which is connected by a shaft 26 to a gear box 28 can be used to power any type of load normally applicable to this type of engine. In this case the engine will be described as powering a rotor 30, such as that used in a helicopter, from gear box 28. Conventionally, the rotor 30 has a set of blades 32 for which the collective pitch angle and thus the amount of air driven by the blades can be varied. The collective pitch throttle 54 is mechanically linked to the blades 32 (illustrated by a dotted line) through a suitable arrangement to provide this variation.

By modulating the fuel flow (Wf) to the engine 10 the speed and thus output power of free turbine 24 may be varied. To accomplish this task the pneumatic fuel control 34 is connected by a suitable conduit 35 to a pump 36 which receives fuel from a supply 38. This pressurized fuel is metered and output to the connecting conduit 39 to supply the fuel ring 16 with fuel flow (Wf). The return of any unused fuel from the pneumatic fuel control 34 is through conduit 37 to the output of pump 36.

The pneumatic fuel control 34 modulates the amount of fuel Wf supplied to the fuel ring 16 of the engine by varying the position of a fuel control valve with two pneumatic control pressures Px, Py, respectively. The control pressures Px and Py can be developed in many different manners, but in the present application they are preferably attained from a source of pneumatic pressure developed by the engine, the compressor pressure, Pc. The control pressures Px and Py are generated by restricting the source pressure Pc through constrictions 40 and 42. A differential of the two pressures (Px-Py) is then used to regulate the fuel valve position.

The differential pressure Px-Py which positions the fuel control valve is governed in a parallel manner by modulating the Py pressure with a gas generator governor 50 in one parallel leg 45 and a free turbine governor 48 in another parallel leg 47. Each of the governors 48 and 50, respectively, interfaces with the Py pressure via a governor interface 44 and 46, respectively. The interfaces 44, 46 can be either mechanical or electronic as will be more fully described hereinafter. In this manner two modulations are placed on Py in the form of an independent signal from each governor.

The gas generator governor 50 is a speed-based governor receiving the PLA signal as an indication of the desired power or scheduled speed of the gas generator portion of the engine and having a feedback term Ng which is the actual speed of the engine. The free turbine governor 48 develops its governing signal from a speed reference signal Nr which is representative of a desired constant speed of the rotor 30. The free turbine governor generally compares this reference to the actual free turbine speed Nf to develop a governing action. However, the output of the free turbine governor 48 is additionally changed or reset dependently on the power desired by the free turbine 24 because of the change of the pitch angle of the blade 32. This information is input to the governor 48 through the signal CLP from the throttle 54.

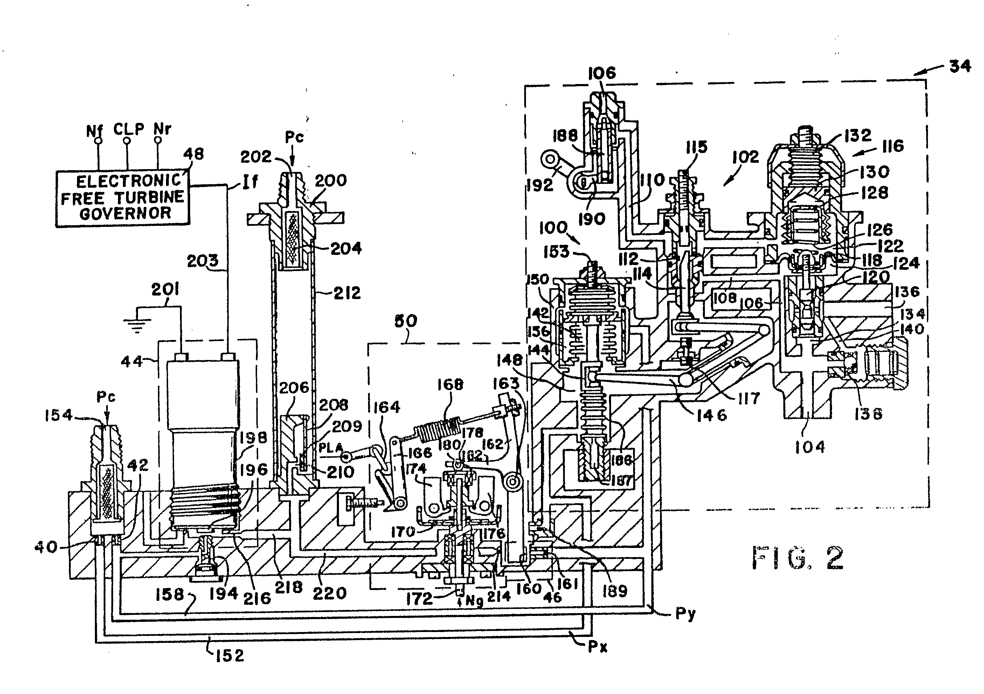

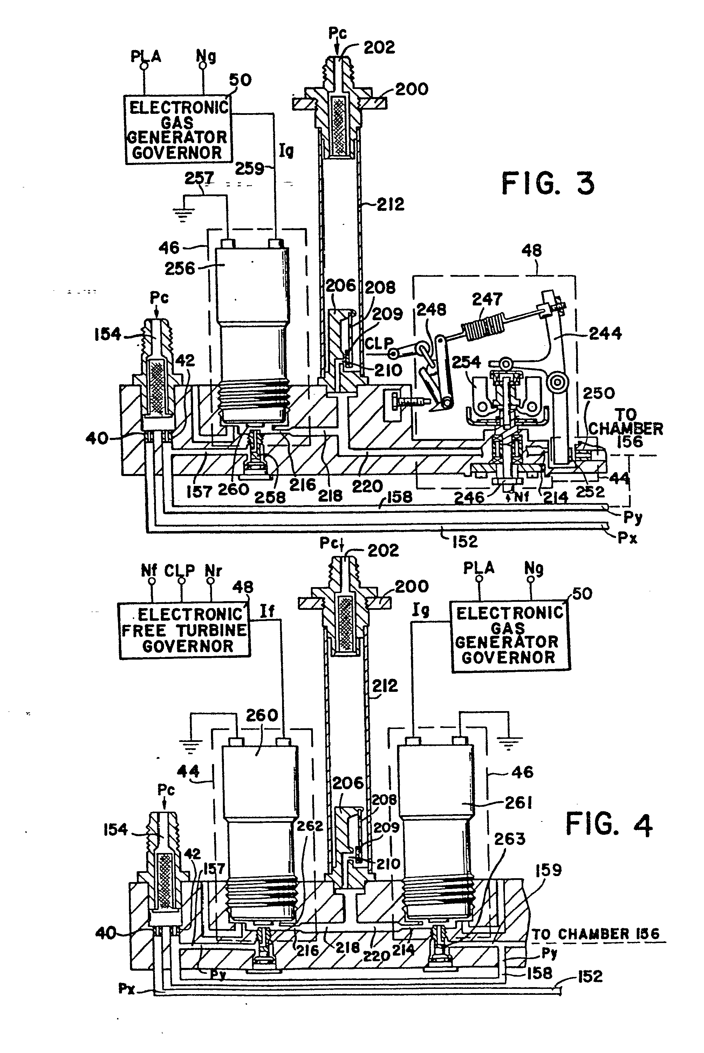

It will now be illustrated in Figures 2, 3, 4 and the following description for first, second, and third embodiments of the invention that either one or both of the governors 48, 50 can be an electronic governor. In the first embodiment, Figure 2, an electronic free turbine governor 48 and electronic governor interface 44 are disclosed. The first embodiment additionally includes a mechanical gas generator governor 50 and mechanical governor interface 46. The second embodiment, Figure 3, illustrates an electronic gas generator governor 50 and an electronic governor interface 46 with a mechanical free turbine governor 48 and mechanical governor interface 44. Figure 4 is used in

describing the third embodiment including an electronic free turbine governor 48 and an electronic gas generator governor 50 with electronic governor interfaces 44, 46, respectively.

With reference now to Figure 2 the pneumatic fuel metering control 34, governors 48, 50, and governor interfaces 44, 46 are shown in more detail for the first embodiment. The pneumatic fuel control 34 consists essentially of a section containing a fuel circuit and a section containing a pneumatic control circuit indicated generally by numbers 100 and 102, respectively. The fuel circuit is connected to the fuel supply source 38 and pump 36 (Figure 1) by the inlet passage 104. An outlet passage 106 of the fuel section is connected to the conduit 39 which transports the fuel flow Wf to the burner ring 16 where it can be sprayed into the incoming air from the compressors. The inlet and outlet passages 104, 106 are connected by unmetered fuel passages 106 and 108 and a metered fuel passage 110. A metering orifice 112 is disposed between the unmetered passage 108 and the metered passage 110 and contains a contoured metering valve 114. The contoured valve 114 operates in response to pressure variations in the pneumatic circuit of section 100 and its positioning regulates the fuel flow.

The pressure drop across the metering orifice 112 is controlled by a pressure regulator generally indicated by a numeral 116. The regulator consists of a diaphragm 118 attached to a valve 120. The valve 120 is operated by the diaphragm in response to the differential pressure between a chamber 122 and a chamber 124. Chamber 122 communicates with the upstream side of metering orifice 112 and chamber 124 communicates with the downstream side of metering orifice 112 such that the pressure differential across the diaphragm is equivalent to the pressure differential across the orifice. The valve 120 varies return fuel flow from passage 134 to passage 136 such that the pressure differential remains constant. The constant pressure differential can be adjusted by a spring 126 reacting between the diaphragm 118 and an adjustment means 128. The adjustment means consists of a movable cap 130 positioned by an adjustment screw 132.

As the valve 120 moves longitudinally in response to variations in pressure between chambers 122 and 124 fuel is returned to the source of supply through passage 136 which connectes to conduit 37.

A relief valve 138 of the ball check type is located between the passage 104 and return passage 136 through a bypass passage 140. Thus, in the system the fuel is maintained at a substantially constant pressure differential across the metering orifice 112 which implies that the fuel flow will be dependent only on metering valve position. The position of the metering valve 114 is varied by the pneumatic circuit to obtain the required fuel·flow, Wf, between a maximum fuel flow provided by a stop 117 and a minimum fuel flow provided by a stop 115.

The fuel valve 114 is positioned by a pressure responsive device indicated generally by numeral 100 and consisting of a main control or governor bellows 142 connected to the valve 114 by a stem 144 and a linkage assembly 146 such as a torque tube. Movement of the stem 144 downwardly as viewed in the present figure results in an increase in the opening of valve 114 and movement upwardly results in a decrease in opening.

The bellows 142 communicates internally with a chamber 148 in a housing 150. The chamber 148 communicates to the control pressure Px or compressor pressure Pc through conduit 152 and restriction 40. The external side of the bellows 142 is subjected to the control pressure Py consisting of a modulated compressor discharge pressure Pc. The chamber 156 surrounding the bellows 142 is connected to compressor discharge passage 154 by a conduit 158 and restriction 42. The control pressure Py in the external chamber 156 is controlled by the gas generator governor 50 and the free turbine governor 48 as will be more fully described hereinafter.

The bellows 142 expands and contracts according to the initial force applied by a set screw 153 and the pressure differential between chambers 148 and 156, to position the fuel metering valve 114. Since the control pressure Px is in this example the compressor pressure Pc, the pneumatic metering control will schedule the fuel air ratio Wf/Pc as a function of the control pressure Py. This action is caused by the same differential (Px-Py) providing a different fuel flow ratio because control pressure Px varies according to the compressor pressure ·Pc.

The gas generator governor 50 in this embodiment is a mechanical governor which modulates the pressure Py through mechanical interface means 46, including a valve 160 and restriction or bleed 161. The valve 160, whose position with respect to the restriction 161 is controlled by a lever 162, modulates the pressure drop across the restriction by varying the open area thereof. The lever 162 is pivoted on pin 163 and mechanically connected to the signal PLA from the power lever throttle through a linkage consisting of a lever 166, a cam assembly 164, and a spring 168. The cam 164 can be contoured to produce any desired PLA vs. scheduled speed characteristic applicable to such engines. When the power lever throttle is moved in the direction to increase the speed of the engine, the tension on spring 168 is increased thereby tending to move the lever 162 in the direction to seat valve 160 on the valve seat and close orifice 161. A movement of the throttle lever in the opposite direction causes an opening of the bleed.

Another portion of the gas generator governor 50 is driven from the turbine through shaft 172 at a speed representative of actual gas generator speed Ng. The shaft 172 rotates a platform 170 and causes weights 174 and 176 mounted thereon to move outwardly in response to the centrifugal force of rotation. The movement of the weights shifts sleeve 178 upwardly against roller 180 to provide a force representative of the parameter Ng. The roller is supported on a lever 182 which is additionally attached to the lever 162. The roller 180 is held downwardly in a position to resist the upward movement of the sleeve 178 by the spring 168 and positioning of lever 162. The mechanism therefore comprises a governor in which the opposing forces balance one another to modulate the Py pressure and thus position the fuel valve 114.

For example, when the cam assembly 164 is moved in a direction to accelerate the engine, the lever 162 is rotated counterclockwise to increase pressure Py and increase turbine speed. As the weights move outwardly in response to an increase in turbine speed, lever 162 tends to rotate angularly in the clockwise direction to open valve 160. As the valve 160 is opened air is bled from the orifice 161 and chamber 156, thereby reducing pressure in the chamber. This action causes the bellows 142 to expand and move stem 144 upwardly and through the linkage to move valve 114 toward a closed position. The closing of the valve will decrease fuel flow and slow the turbine speed to establish a steady running condition for the particular throttle position as determined by the position of the cam assembly 164.

When the cam assembly 164 is moved in the direction to decelerate the engine, lever 162, because of the connection of spring 168, tends to move in the clockwise direction again opening valve 160 and causing a decrease in pressure in chamber 156. As discussed before, this causes the stem 144 to move upwardly thereby moving the linkage in the direction to close fuel metering valve 114. The flyweights move inwardly in response to a decrease in speed and cause lever 162 to tend to move in a counterclockwise direction. This results in an increase in pressure in chamber 156 and a decrease in the differential between chambers 156 and 148. The increased pressure is transmitted to the chamber to contract the bellows and move valve 114 to an open position to increase fuel supply to the engine. As the engine increases speed, the flyweights of the governor again move lever 162 outwardly and tend to move valve 160 toward a more open position. This operation continues until a steady state condition is reached between the operation of the governor 50 and the governor bellows 142.

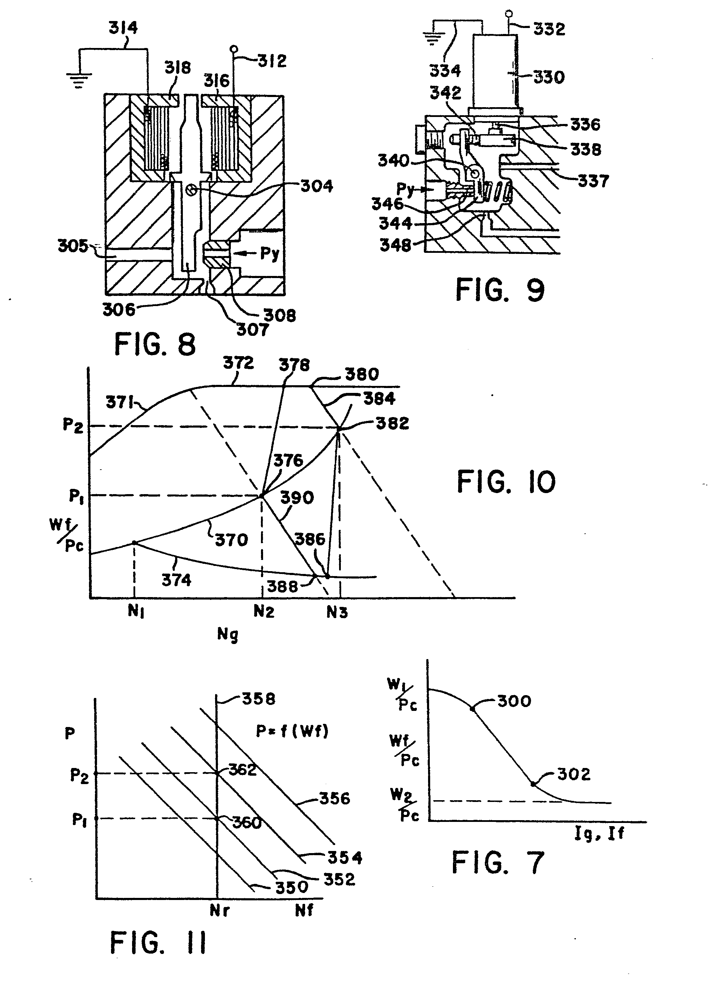

The free turbine governor 48 in this implementation is shown as an electronic governor which outputs current signal If. The electronic free turbine governor of this type is more fully described in the detailed system block diagram of Figure 6. The governor comprises basically a linear current amplifier 230 which outputs the current signal If as a gain times its input signal. The signal transmitted to the input of the current amplifier is primarily a scheduled value of power (Pr) for a particular collective pitch (CLP) position of the helicoptor blades. The power term Pr is input to one junction of a summing means 232 from a scheduling circuit 234 having a particular desired schedule stored within. Preferably, the term from the scheduling circuit will be the function of power desired from the engine for a particular collective pitch setting. The other input to the summing means 232 is derived from a summing means 236 which differences the rotor reference speed Nr with the actual rotor speed Nf. This differential signal is applied as a trim to the CLP schedule to maintain a constant rotor speed for any particular power setting.

An electronic interface means 44 for interfacing the electronic free turbine governor 48 with the pneumatic fuel control 34 is provided by a valve orifice or bleed 194 and a proportional solenoid 198 having a movable armature valve 196. The orifice 194 is connected to and communicates with the control chamber 156 via conduit 158. The valve 196 of the solenoid is proportionally positioned with respect to the amount of current provided to terminals 201 and 203 from the electronic free turbine governor. The positioning of the valve 196 with respect to the orifice therefore, modulates the control pressure Py in chamber 156 to position the fuel control valve 114. Movements of the valve 196 in the direction of the orifice restrict flow through the orifice and cause an increase in the pressure Py in chamber 156. An increase in the pressure Py in chamber 156, as described previously, will open fuel valve 114 to accelerate the gas generator. Conversely, movements of the valve 196 away from the orifice 194 will cause a drop in the pressure Py in chamber 156 and a consequent closing of the fuel valve 114 with a deceleration of the engine. Feedback is provided by the parameter Nf, the free turbine speed, to permit a change in control current If to bring movement of the valve 196 to a steady state position.

Movements of the valve 196 are controlled proportionally by the amount of current applied to the solenoid 198. Preferably, increases in current to the terminals of solenoid 198 will permit the valve 196 to move upwardly and away from the orifice 194. This will cause a closure of the valve upon failure of energization current from the free turbine governor 48. The preferred schedule of fuel/air ratio Wf/Pc as a function of control current If is more fully shown in Figure 7. This Figure is descriptive of the interface where a maximum fuel/air ratio W1/Pc is obtained when the orifice 194 is fully closed at zero control current If applied to solenoid 198 and pressure Py is maximum and where a minimum fuel/air ratio W2/Pc is obtained when the orifice 194 is fully open at maximum control current If applied to solenoid 198 and pressure Py is minimum. Between these two extremes, is a linear range bounded by points 300, 302 along which governing action of the control can be accomplished. The operation of the interface is therefore fail-safe in that closure of the orifice 194 allows control of the engine to be maintained by the gas generator governor 50 through the PLA throttle input.

In the manner just described, the two governors work in combination to meter fuel to the engine. The parallel governing scheme produces a system whereby fuel control is initially governed by the PLA setting until the fuel valve position is independently reset by the CLP setting. In general operation, the PLA setting is rotated to maximum and thereafter the free turbine governor limits the power output from the engine in concert with the CLP setting.

Further included in the fuel control system shown in Figure 2 is a means for preventing the control valve-orifice combinations of the parallel governing scheme from becoming clogged with debris or possibly freezing shut. Pneumatic pressure preferably from a source, such as compressor pressure Pc, is applied to input tube 202 of a fitting 200. Filter 204 cleanses the pneumatic fluid and thereafter communicates it to conduit 212 and a mounting block 206 having a passage 210. Passage 210 communicates with passages 218 and 220 which respectively terminate in nozzles 216 and 214. The pneumatic pressure input from the orifice 202 is directed by the nozzles substantially perpendicular to the space between the control valve-orifice combinations. During the engine starting sequence, this warm pressurized stream will clear debris and prevent the valve-orifice combinations from freezing shut. After the engine has warmed sufficiently, as sensed by a bimetal strip 208 on the mounting block 206 the nozzles will be shut off from compressor pressure by the bimetal strip bending to position valve 209 to close passage 210. Thus, after the starting sequence of the engine, the system is assured that the control valve-orifice combinations of the parallel governing scheme are not frozen shut and are cleared of debris. Thereafter, the feature is disabled by the bimetal valve to assure that it does not interfere with the control pressure governing scheme.

The basic governing action of the free turbine governor is better illustrated in Figure 11 where the power (P) output from the engine forms the ordinate axis of the graph and the free turbine speed Nf forms the abscissa. It is seen that there is a family of governor curves 350, 352, 354, 356 of a predetermined slope set by the droop or the proportionality constant between Nr and Nf. For variable power settings so that the free turbine speed Nf is equal to the reference speed Nr (reference line 358) the system moves through the various governor lines based on the demanded power setting from the collective pitch signal CLP. For example, assume governor line 352 will produce power output P1 when the free turbine speed Nf is at the reference speed Nr at point 360. If there is no power change demanded, the governing action of the free turbine governor will maintain the rotor speed constant.

However, if an increase in power from P1 to P2 is demanded the governor will droop and the rotor will be underspeed unless the curve 352 is shifted or set upwardly to curve 354 where Nr will equal Nf at point 362. This resetting of the governor curves is caused by adding the scheduled power parameter Pr (Figure 6) to the basic proportional governor error (Nr-Nf) to maintain governing action at various power settings.

The pneumatic fuel metering control acts under the regulation of the control pressure Py to permit accelerations and decelerations of the engine. This action of the control will be more fully described with respect to Figure 10. The Figure graphically shows fuel/air ratio Wf/Pc as a function of gas generator speed Ng for the engine steady running line 370, the engine acceleration limit curve 372, and the engine deceleration limit curve 374. The steady running line 370 indicates the fuel/air ratio necessary to maintain a constant steady engine speed while the limits 372, 374 represents maximum allowable over or under fueling to prevent stall or flame out, respectively.

The acceleration limit 372 is developed for the control by an acceleration bellows 186 (Figure 2) which is referenced on the outside to control pressure Px from chamber 148 and inside to a reference pressure, preferably a vacuum, in chamber 187. For accelerations of the engine, the free turbine governor 48 supplies a decreasing current If causing the solenoid 198 to close orifice 194. Assuming the PLA throttle 52 is at maximum and orifice 161 is closed, this action results in an increase in control pressure Py until it equals Px. Since there is no pressure differential across the governor bellows 142, the acceleration bellows 186 positions the fuel valve according to the difference between Px (Pc) and the reference pressure in chamber 187. A speed enhancement for the fuel/air ratio limit, shown as slope 371 in Figure 10, is provided by fixed orifice 189 changing the relationship between the reference pressure and pressure Py until it saturates at some given compressor speed.

The acceleration of the engine caused by a CLP movement is illustrated in Figure 10 as having the engine make a transition from a steady speed of N2 at point 376 to the acceleration limit at point 378. The engine remains on the acceleration limit 372 until at point 380 the amount of overfueling demanded by the governor is less than the limit. The engine then accelerates along the free turbine governor line 384 until it reaches a new steady state speed at point 382.

For decelerations of the engine, the deceleration limit 374 is provided by the minimum fuel stop 115 of the pneumatic fuel metering control 34. Since the minimum fuel stop maintains constant fuel flow, the fuel/air ratio of the deceleration limit will increase with decreasing speed and compressor pressure. To initiate a deceleration, the governor 48 provides a signal to solenoid 198 causing the armature 196 to move away from the orifice 194. The result is a drop in the Py pressure and an upward movement of bellows 142 to close the fuel valve 114 to where it abuts stop 115. A graphical representation of this action is illustrated in Figure 10 as the engine decelerating from a constant speed of N3 at point 382 to the deceleration limit at point 386. The engine will continue to decelerate along the deceleration line 374 until point 388 where the governor requests less under-fueling than the limit. The engine will thereafter decelerate along governor line 390 until it reaches the steady running line at point 376 and speed N2.

Figure 3 will now be more fully described to illustrate a second embodiment of the invention having an electronic gas generator governor 50, a mechanical free turbine governor 48, and governor interfaces 46, 44, respectively. The fuel metering control 34 is not shown but it is identical to that of Figure 2 with connection to control pressures Px, Py by conduits 152, 158, respectively. Identical elements in this embodiment have been labeled with the same reference numerals as those of Figure 2 for the purpose of clarity.

The mechanical free turbine governor 48 comprises a pivoted lever 244 which balances the free turbine speed Nf input to shaft 246 against the free turbine reference speed Nr. The reference speed is provided as the initial tensioning of spring 247. This action provides a trim to the scheduled power term of cam 248 which positions the lever 244 with respect to a bleed 250. Flyweights 254 produce a force which is balanced against Nr until reset by the cam 248 and input signal CLP. This portion of the second embodiment of the control system comprises a mechanical free turbine governor having the same controlling inputs of CLP, Nr, and Nf as previously described for the electronic free turbine governor in Figure 2. The governor 48 of Figure 3 modulates the control pressure Py by means of the mechanical interface 44 comprising valve 252 and the bleed 250. The pressure Py is thus a function of the position of the valve with respect to the bleed.

An electronic gas generator governor 50 is provided in parallel with the free turbine governor 48 by means of an electronic interface including a proportional solenoid 256 and bleed 258. The control pressure Py is modulated by the position of the armature valve 260 with respect to the bleed 258. The valve position is a proportional function of the control current Ig input to terminals 257, 259 from the electronic governor 50.

The gas generator governor 50 shown generally in schematic block diagram form in Figure 5, includes a linear current amplifier 238 that multiplies an input term times a gain to yield the output current signal Ig. The input term to the amplifier 238 is the difference between the output of a scheduling circuit 242 and the signal Ng indicative of the actual speed of the gas generator. The output of the scheduling circuit is derived as a function of the power lever angle signal PLA. Preferably, the parameter output is a function of the desired power output from the gas generator portion of the engine.

The current Ig output from the governor 50 regulates the positioning of an armature valve on a proportional solenoid acting as an interface between the fuel control and electronics. The valve position determines the pressure bled from orifice 258 which communicates with the Py control pressure via conduit 157.

It can be seen that the embodiment shown in Figure 3 provides a parallel governing scheme where the electronic gas generator governor controls the pressure Py through the interface 46 and the mechanical free turbine governor controls the Py pressure through the interface 44. Preferably, as was the case for the previous embodiment, the free turbine governor provides a limiting range of power settings for the gas generator governor.

In a third embodiment, better illustrated by Figure 4, the system includes an electronic gas generator governor 50, and electronic free turbine governor 48, and governor interfaces 44, 46, respectively. In this implementation the governors 48, 50 are as previously described with respect to Figures 5 and 6 and the interfaces 44, 46 are proportional solenoids 260, 261 regulating bleeds 262, 263, respectively. The bleeds communicate with the Py pressure in conduit 158 via conduits 157

and 159 to regulate the pneumatic pressure therein. Particularly, the gas generator governor controls the Py pressure with respect to the parameters PLA, Ng and the free turbine governor controls the Py pressure with respect to the parameters Nf, Nr, CLP.

Preferably, as was the case for the two previous embodiments, the free turbine governor provides a limiting range of power settings for the gas generator governor. In this manner the system provides a parallel governing scheme for a pneumatic fuel control using a dual configuration of governors. Both governors are electronic and are provided with interfaces that fail in the closed position such that the control of the engine may be handled by the healthy control.

The electronic interface between the governors 48, 50 and the pneumatic control has been illustrated in the three embodiments of the invention as a proportional solenoid and orifice combination. This interface can also be advantageously implemented by a number of electrically responsive devices which have a movable armature. Figures 8 and 9 illustrate two of these devices.

In Figure 8 a torque motor having an armature 306 pivotable about a pin 304 is illustrated. The armature 304 is attracted by a magnetic field set up in pole pieces 316, 318 by feeding a current to a coil coupled therewith. The currents If, Ig can be used for varying the field and hence, position of the armature 306 by connecting the terminal leads 312, 314 to one of the governors 48, 50. The control pressure Py input to a nozzle or bleed 308 with a predetermined orifice area will then be regulated by the current as armature 306 changes position with respect to the bleed. Similar governing action to that previously described will occur as the Py pressure modulates fuel flow as a function of the governor output current. Additionally, a pressure vent 305 to the atmosphere is provided to permit better pressure control. A nozzle 307 can be positioned perpendicularly to the armature/bleed combination and communicated to conduit 220 so as to assure a clear passage.

Alternatively, the electronic interface illustrated in Figure 9 can be provided for either of the electronic governors 48, 50. In this figure, a stepper motor 330 is connected by shaft 336 to a disc-shaped cam 338. The cam 338 whose peripheral edge forms a schedule of positions with respect to angular rotation is turned by the motor in response to an input current.  The control current of the stepped cam consists of either of the output currents If, Ig of the governors to position the cam.  The cam 338 rotates and in turn causes the pivoting about point 340 of a valve member 344 because of a follower 342 attached thereto.  The pressure Py is modulated by the positioning of the valve member 344 with respect to a bleed 346.  Nozzle 348 communicating to conduits 220 can be provided for the starting sequence of the engine and port 337 provide an atmospheric vent.

## CLAIMS

1. A fuel control system for a gas turbine engine (10) of the kind having at least one compressor (12,14) and turbine spool (20,22) and a free turbine (24), comprising a pneumatic fuel metering device (34) including a main fuel passage (108,110), a metering valve (114) in said passage, a pneumatic control system (100) for said valve including a chamber (156), a governor bellows (142) in said chamber, a linkage (146) connecting said bellows to said valve, a first passage (158) for communicating modulated compressor discharge pressure to one side of said bellows, a second passage (152) connecting said compressor discharge pressure with the other side of said governor bellows, and having a first bleed (161) and a second bleed (194) in said second passage, said system further comprising a mechanical governor (50) responsive to turbine speed (Ng) for controlling said first bleed (161) and being characterized in that it further includes an electronic governor (48) responsive to free turbine speed (Nf) for generating an electrical signal (If) indicative of a desired engine output power, and means (44) for controlling said second bleed (194) in accordance with said electrical signal (If).

2. A fuel control system according to claim 1, characterized in that said bleed controlling means (44) is a proportional solenoid (198) having an armature (196) controlling the opening of the second bleed (194) proportionally to the electrical signal (If).

3. A fuel control system according to claim 1, characterized in that said bleed controlling means (44) is a torque motor having a pivotable armature (306) controlling the opening of the second bleed (308) proportionally to the electrical signal (If).

4. A fuel control system according to claim 1, characterized in that said bleed controlling means (44) is a stepper motor having a movable armature (344) controlling the opening of the second bleed (346) proportionally to the electrical signal (If).

5. A fuel control system for a gas turbine/engine (10) of the kind having at least one compressor (12,14) and turbine spool (20,22) and a free turbine (24), comprising a pneumatic fuel metering device (34) including a main fuel passage (108,110), a metering valve (114) in said passage, a pneumatic control system (100) for said valve including a chamber (156), a governor bellows (142) in said chamber, a linkage (146) connecting said bellows to said valve, a first passage (158) for communicating modulated compressor discharge pressure to one side of said bellows, a second passage (152) connecting said compressor discharge pressure with the other side of said governor bellows, and having a first bleed (250) and a second bleed (258) in said second passage, said system further comprising a

./.

mechanical governor (48) responsive to free turbine speed (Nf) for controlling said first bleed (250) and being characterized in that it further includes an electronic governor (50) responsive to turbine speed (Ng) for generating an electrical signal (Ig) indicative of a desired engine output power, and means (46) for controlling said second bleed (258) in accordance with said electrical signal (Ig).

6. A fuel control system according to claim 5, characterized in that said bleed controlling means (46) is a proportional solenoid (256) having an armature (260) controlling the opening of the second bleed (258) proportionally to the electrical signal (Ig).

7. A fuel control system according to claim 5, characterized in that said bleed controlling means (46) is a torque motor having a pivotable armature (306) controlling the opening of the second bleed (308) proportionally to the electrical signal (Ig).

8. A fuel control system according to claim 5, characterized in that said bleed controlling means (46) is a stepper motor having a movable armature (344) controlling the opening of the second bleed (346) proportionally to the electrical signal (Ig).

9. A fuel control system for a gas turbine/(10) of the kind having at least one compressor (12,14) and turbine spool (20,22) and a free turbine (24), comprising a pneumatic fuel metering device (34) including a main fuel passage (108,110), a metering valve (114) in said passage, a pneumatic control system (100) for said valve including a chamber (156), a governor bellows (142) in said chamber, a linkage (146) connecting said bellows to said valve, a first passage (158) for communicating modulated compressor discharge pressure to one side of said bellows, a second passage (152) connecting said compressor discharge pressure with the other side of said governor bellows, and having a first bleed (263) and a second bleed (262) in said second passage, said system being characterized in that it further comprises an electronic governor (48) responsive to free turbine speed (Nf) for generating a first electrical signal (If) indicative of a desired engine output power, means (44) for controlling one of said first and second bleeds (262,263) in accordance with said first electrical signal (If), an electronic governor (50) responsive to turbine speed (Ng) for generating a second electrical signal (Ig) indicative of a desired engine output power, and means (46) for controlling the other of said first and second bleeds (262,263) in accordance with said second electrical signal (Ig).

10. A fuel control system according to claim 9, characterized in that one bleed controlling means (44) is an electrically responsive device (260, 306, 330) with a movable armature controlling the opening of the one bleed (262) proportionally to the first electrical signal (If), comprising one of the group consisting of a proportional solenoid, a torque motor, and a stepper motor.

11. A fuel control system according to claim 9, characterized in that the other bleed controlling means (46) is an electrically responsive device (260, 306, 330) with a movable armature controlling the opening of the other bleed (263) proportionally to the second electrical signal (Ig), comprising one of the group consisting of a proportional solenoid, a torque motor, and a stepper motor.

FIG. 1

FIG. 5

FIG. 6

FIG. 2

FIG. 3

FIG. 4

0082785

4/4

FIG. 8

FIG. 9

FIG. 10

FIG. 11

FIG. 7